# EUROPEAN PATENT APPLICATION

(11) **EP 4 459 368 A1**
(43) Date of publication of application: **06.11.2024**
(21) Application number: 22916154.2
(22) Date of filing: 27.12.2022
(51) Int. Cl.: G02F 1/13, B32B 7/023, B32B 27/00, G02F 1/1334

(54) **LIGHT CONTROL LAMINATE AND LIGHT CONTROL DEVICE**

(30) Priority: 27.12.2021 JP 2021212390
(71) Applicant: Toppan Holdings Inc., Tokyo 110-0016 (JP)
(72) Inventor: TAKAHASHI Yusuke, Tokyo 110-0016 (JP); NAKAJIMA Yudai, Tokyo 110-0016 (JP)
(74) Representative: TBK
(86) International application number: PCT/JP2022/048431
(87) International publication number: WO 2023/127932

(57) **Abstract**

A light control laminate 11 is provided, including a light control sheet 21; and an adhesive layer 31 that adheres a rear surface of the light control sheet to a transparent body 41 by self-adhesion, the light control laminate 11 being provided with a sealing part 51 that adheres an edge face of the light control sheet 21 to the transparent body 41, the sealing part 51 being used for sealing the edge face 21E of the light control sheet 21, wherein the light control sheet 21 includes a first hard coat layer that constitutes a front surface 21F of the light control sheet 21, and a second hard coat layer that constitutes the rear surface 21B of the light control sheet, by which separation and re-adhesion of the light control sheet 21 are facilitated, while suppressing misalignment of the light control sheet 21 with respect to the transparent body 41.

## Description

### [Technical Field]

The present disclosure relates to light control laminates including an adhesive layer for adhering a light control sheet to a transparent body, and light control devices.

### [Background Art]

Light control sheets include a light control layer containing a liquid crystal composition, and substrates having flexibility and sandwiching the light control layer. The substrates having flexibility each include a transparent substrate and transparent electrode layers supported by the transparent substrate. A voltage applied between the transparent electrode layers changes alignment of the liquid crystal composition to change visibility of objects seen through the light control sheet.

The light control sheet is adhered to a transparent body via an adhesive layer. The transparent body may be a glass plate constituting windows or a resin plate constituting partitions. A first example of the material constituting the adhesive layer may be a resin adhesive, such as an epoxy resin, silicone resin, or polyacrylate, requiring curing (e.g., see PTLs. 1, 2 and 3). A second example of the material constituting the adhesive layer may be a self-adhesive resin adhesive, such as a polyolefin, polyamide, polyester, polyacrylate, polyurethane, chlorine resin, or silicone resin (e.g., see PTL 4). The self-adhesive adhesive layer enables separation and re-adhesion of the light control sheet during positioning of the light control sheet.

### [Citation List]

### [Patent Literature]

PTL 1: JP H6-186540 A
PTL 2: JP 6405442 B
PTL 3: JP 2019-95697 A
PTL 4: JP 2015-71284 A

### [Summary of the Invention]

### [Technical Problem]

As described above, the self-adhesive adhesive layer enables separation and re-adhesion of the light control sheet during positioning of the light control sheet. However, the self-adhesive adhesive layer tends to separate by itself after being positioned. Techniques for enabling separation and re-adhesion of light control sheets while suppressing them from separating by themselves can contribute to improving production efficiency or maintainability of light control laminates to develop industries associated with light control devices.

### [Solution to Problem]

A light control laminate for solving the above issues includes a light control sheet; and an adhesive layer that adheres a rear surface of the light control sheet to a transparent body by self-adhesion, the light control laminate being provided with a sealing part that adheres an edge face of the light control sheet to the transparent body, the sealing part being used for sealing the edge face of the light control sheet. The above light control sheet includes a first hard coat layer constituting a front surface of the light control sheet, and a second hard coat layer constituting the rear surface of the light control sheet.

A light control device for solving the above issues includes a transparent body; a light control sheet that is adhered to the transparent body; and a sealing part that adheres an edge face of the light control sheet to the transparent body and seals the edge face of the light control sheet. The above transparent body includes an adhesive layer that adheres a rear surface of the light control sheet to the transparent body by self-adhesion. The above light control sheet includes a first hard coat layer constituting a front surface of the light control sheet, and a second hard coat layer constituting the rear surface of the light control sheet.

The first hard coat layer in the above configuration (i) enhances physical durability at the front surface of the light control sheet. Adhesion of the light control sheet derived from self-adhesion (ii) enables separation and re-adhesion of the light control sheet during positioning of the light control sheet. However, internal stress in the first hard coat layer acts on the light control sheet so as to induce self-separation in the light control sheet after being positioned.

In this regard, internal stress in the second hard coat layer acts on the light control sheet so as to conflict with the internal stress in the first hard coat layer. In other words, the internal stress in the second hard coat layer acts on the light control sheet so as to mitigate induction of self-separation. Consequently, the light control device including two hard coat layers (i) improves physical durability and (ii) enables separation and re-adhesion during positioning, while (iii) reducing the internal stress that could be a factor inducing self-separation.

On the other hand, the area surrounding the center portion of the light control sheet after being positioned is adhered to the transparent body in the entire area surrounding the center portion. In contrast, the edge portion of the light control sheet after being positioned is adhered to the transparent body in only part of the area of the edge portion. Therefore, adhesion of the adhesive layer derived from self-adhesion becomes weaker to some extent at the edge portion of the light control sheet than at the center portion thereof.

In this regard, the sealing part included in the light control device not only seals the edge face of the light control sheet but also adheres the edge face of the positioned light control sheet to the transparent body. In other words, the sealing part included in the light control device has a function of sealing the edge face of the light control sheet, and a function of supplementing adhesion of the adhesive layer in the edge portion where self-separation could start. Consequently, the light control device including the sealing part described above can (i) improve physical durability and (ii) enables separation and re-adhesion during positioning, while (iv) reducing the number of starting points of self-separation.

In the above light control laminate, the first hard coat layer may have a thickness smaller than that of the second hard coat layer.

The internal stress in the second hard coat layer in the above configuration acts on the light control sheet so as to press the edge portion of the light control sheet toward the transparent body, even more than at the center portion thereof, against the internal stress in the first hard coat layer. Consequently, the light control device including the second hard coat layer can (v) increase the internal stress that could be a factor of suppressing self-separation so as to (iv) further reduce the number of starting points of self-separation.

In the above light control laminate, the adhesive layer may include a self-adhesive layer that is applied to the rear surface of the light control sheet; and a release layer that constitutes a rear surface of the light control laminate and covers the self-adhesive layer.

The adhesive layer in the above configuration includes the self-adhesive layer applied to the second hard coat layer. The configuration in which the rear surface of the light control sheet is integrated with the self-adhesive layer simplifies the layer structure of the light control laminate, compared to the case where another layer is provided between the rear surface of the light control sheet and the self-adhesive layer. Since the release layer protects the self-adhesive layer, handling of the light control laminate including the self-adhesive layer can be facilitated.

In the above light control laminate, the adhesive layer may include a release layer that constitutes the rear surface of the light control laminate; a substrate layer that is non-removably bonded to the rear surface of the light control sheet; and a self-adhesive layer located between the release layer and the substrate layer.

The adhesive layer in the above configuration includes the substrate layer bonded to the second hard coat layer, and the self-adhesive layer supported by the substrate layer. In other words, since the adhesive laminate including the self-adhesive layer and the substrate layer is a separate body from the light control sheet, the method of adhering the adhesive laminate to the rear surface of the light control sheet can be integrated into production of the light control laminate. Thus, the method of separately producing the adhesive laminate and the light control sheet can be integrated into the method of producing the light control sheet as a method which is not constrained by the self-adhesive layer. Furthermore, the method of separately producing the adhesive laminate and the light control sheet can be integrated into the method of producing the self-adhesive layer as a method which is not constrained by the light control sheet.

In the above light control laminate, the light control sheet may include a first substrate having flexibility; a second substrate having flexibility; and a light control layer sandwiched between the first substrate and the second substrate, the light control layer containing an organic polymer layer defining multiple voids therein and a liquid crystal composition filling the voids.

The light control sheet containing a liquid crystal composition between the first substrate and the second substrate can cause internal separation of the light control layer, other than separation at the interface between the light control sheet and the adhesive layer. In this regard, the adhesive layer that adheres the light control sheet to the transparent body by self-adhesion can reduce the external stress required for separating the light control sheet during positioning of the light control sheet on the transparent body. Consequently, (ii) achieving separation and re-adhesion exerts a more beneficial effect in the light control sheet in which internal separation of the light control layer can occur.

A light control device for solving the above issues includes a transparent body and the light control laminate described above.

In the light control device, the sealing part may adhere an edge of the front surface of the light control sheet to the transparent body. The sealing part that adheres the edge of the front surface of the light control sheet to the transparent body (iv) enhances the effect of reducing the number of starting points of self-separation.

In the above light control device, the sealing part may be a cured product of a UV curable resin. The sealing part that is a cured product of a UV curable resin can be employed in a method of adhering the positioned light control sheet to the transparent body as a processing method of a light control sheet.

In the above light control device, the transparent body may have a flat plate shape. In the case where the transparent body has a flat plate shape, (iii) thicknesses of the two hard coat layers can be easily determined so as to reduce the internal stress that could be a factor inducing self-separation.

### [Advantageous Effects of the Invention]

The light control laminate and the light control device of the present disclosure (i) improve physical durability and (ii) achieves separation and re-adhesion, while suppressing self-separation of the light control sheet.

### [Brief Description of the Drawings]

Fig. 1 is a cross-sectional view illustrating a layer configuration of a light control device.
Fig. 2 is a cross-sectional view illustrating a layer configuration of a light control laminate.
Fig. 3 is a process diagram illustrating a production process of a light control laminate.
Fig. 4 is a process diagram illustrating a production process of a light control laminate.
Fig. 5 is a table showing evaluation results of light control devices according to test examples.

### [Description of the Embodiments]

Referring to the drawings, a light control laminate and a light control device will be described. First, a schematic configuration of a light control device will be described and then a configuration of a light control laminate will be described.

### [Light control laminate]

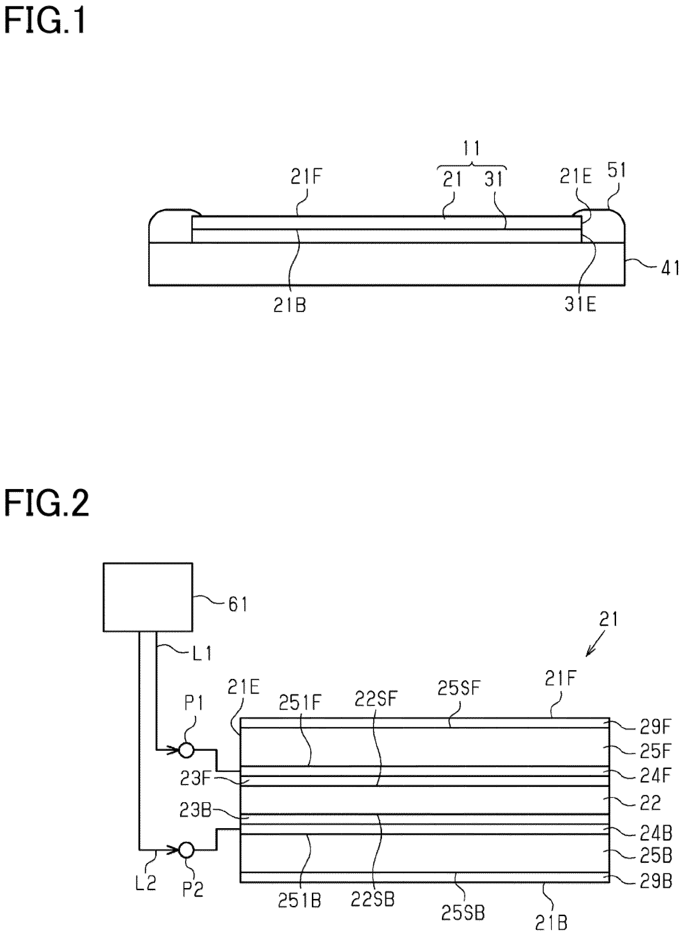

As shown in Fig. 1, a light control device includes a light control laminate 11, a transparent body 41, and a sealing part 51. The light control device may include a drive unit 61 (see Fig. 2) for driving a light control sheet 21.

The light control laminate 11 includes an adhesive layer 31 for adhering the light control sheet 21 to the transparent body 41, and the light control sheet 21. The sealing part 51 seals an edge face 21E of the light control sheet 21. The adhesive layer 31 is self-adhesive. Self-adhesion means that it does not require curing for adhesion, and adheres the light control sheet 21 to the transparent body 41 using adhesion of the adhesive layer 31 itself. In the light control device, the adhesive layer 31 may be omitted from the light control laminate 11 but may be included in the transparent body 41.

The light control device includes the following configurations (a) to (c).
(a) The front surface 21F and rear surface 21B of the light control sheet 21 are each composed of a hard coat layer.
(b) The adhesive layer 31 adheres the rear surface 21B of the light control sheet 21 to the transparent body 41 by self-adhesion.
(c) The sealing part 51 adheres the edge face 21E of the light control sheet 21 to the transparent body 41.

The light control laminate 11 may be used for windows provided to mobile objects such as vehicles and aircraft, or may be used for windows provided to buildings such as houses and stations. The light control laminate 11 may be used for partitions for defining spaces in offices, or may be used for show windows of stores. The light control laminate 11 may be used for screens on which images are projected.

The transparent body 41 may be a glass body or a resin body. The shape of the transparent body 41 may be planar, smooth convex, or smooth concave. The surface of the transparent body 41 supporting the light control sheet 21 may be planar, smooth convex, or smooth concave. One surface of the transparent body 41 may support one light control sheet 21 or may support two or more light control sheets 21. One light control sheet 21 may be supported by one transparent body 41 or may be sandwiched between two transparent bodies 41. The transparent body 41 may be a glass plate for windows or may be a glass plate for partitions. The transparent body 41 may be a resin case for vehicle lights or may be a resin sheet for screens.

The light control sheet 21 may be of a normal type or of a reverse type. A normal type light control sheet 21 changes the state from opaque to transparent with application of the drive voltage. A normal type light control sheet 21 changes the state from transparent to opaque with release of the drive voltage. A reverse type light control sheet 21 changes the state from transparent to opaque with application of the drive voltage. A reverse type light control sheet 21 changes the state from opaque to transparent with release of the drive voltage. In the transparent state, parallel transmittance is higher than in the opaque state. In the transparent state, haze is lower than in the opaque state.

The normal type light control sheet 21 and the reverse type light control sheet 21 each include transparent electrode layers and a light control layer 22. The following description will be given mainly focusing on a reverse type light control sheet 21 with the above configurations (a) and (b). In the following, differences in configuration of the normal type light control sheet 21 from that of the reverse type light control sheet 21 will be described, and similarities in configuration of the normal type light control sheet to that of the reverse type light control sheet 21 will be omitted.

### [Light control sheet 21]

As shown in Fig. 2, the light control sheet 21 includes a light control layer 22, a first alignment layer 23F, a second alignment layer 23B, a first electrode layer 24F, a second electrode layer 24B, a first substrate 25F, a second substrate 25B, a first hard coat layer 29F, and a second hard coat layer 29B.

The light control layer 22 is located between the first alignment layer 23F and the second alignment layer 23B. The light control layer 22 has a first surface 22SF contacting the first alignment layer 23F, and a second surface 22SB contacting the second alignment layer 23B. The first alignment layer 23F is located between the light control layer 22 and the first electrode layer 24F while being in contact with them. The second alignment layer 23B is located between the light control layer 22 and the second electrode layer 24B while being in contact with them.

The first electrode layer 24F is connected to the drive unit 61 via a first connection terminal P1 and a first wiring L1. The first electrode layer 24F is located between the first alignment layer 23F and the first substrate 25F while being in contact with them. The second electrode layer 24B is connected to the drive unit 61 via a second connection terminal P2 and a second wiring L2. The second electrode layer 24B is located between the second alignment layer 23B and the second substrate 25B while being in contact with them.

The light control layer 22 includes an organic polymer layer and a liquid crystal composition. The organic polymer layer defines therein voids filled with the liquid crystal composition. A retention type of the organic polymer layer for the liquid crystal composition may be selected from the group consisting of a polymer dispersion type, a polymer network type, and a capsule type. If the light control layer 22 is required to have improved thickness uniformity, the thickness of the light control layer 22 is preferred to be 5 µm or more. If the light control layer 22 is required to have improved transparency, the thickness of the light control layer 22 is preferred to be 50 µm or less.

A polymer dispersion type light control layer 22 includes an organic polymer layer in which numerous voids are defined and dispersed, with a liquid crystal composition retained in the voids. A polymer network type light control layer 22 includes a three-dimensional mesh organic polymer layer and retains a liquid crystal composition in mutually-communicating voids. A capsule type light control layer 22 includes an organic polymer layer in which capsule-like voids are defined and dispersed, with a liquid crystal composition retained in the capsule-like voids. The voids defined in the organic polymer layer vary in size. The voids defined in the organic polymer layer have sizes, e.g., 0.38 µm or more and 20 µm or less, that can scatter visible light in the light control layer 22.

An example of the liquid crystal compound contained in the liquid crystal composition is a negative type liquid crystal having negative dielectric anisotropy. Examples of the liquid crystal compound include at least one selected from the group consisting of Schiff base compounds, azo compounds, azoxy compounds, biphenyl compounds, terphenyl compounds, benzoic acid ester compounds, tolan compounds, pyrimidine compounds, cyclohexanecarboxylic acid ester compounds, phenylcyclohexane compounds, and dioxane compounds. The liquid crystal composition may contain a polymerizable composition for forming the organic polymer layer, other than the liquid crystal compound. The liquid crystal composition may contain a dichroic dye for coloring the light control layer 22, or may contain a plasticizer for enhancing responsiveness of the liquid crystal compound. The polymerizable composition may be a monomer or oligomer which can be polymerized by UV irradiation. Examples of the dichroic dye include at least one selected from the group consisting of azo dichroic dyes, anthraquinone dichroic dyes, and dioxane dichroic dyes. Examples of the plasticizer include at least one selected from the group consisting of phthalate ester compounds, adipate ester compounds, and phosphate ester compounds.

The first and second alignment layers 23F and 23B both regulate alignment of the liquid crystal compound. The first and second alignment layers 23F and 23B align the liquid crystal compound in the direction in which visible light is transmitted through the light control layer 22. When a voltage is applied to the liquid crystal composition against the alignment regulating force, the first and second alignment layers 23F and 23B allow the liquid crystal compound to change its alignment such that visible light is scattered in the light control layer 22.

The first and second alignment layers 23F and 23B may each be colorless and transparent or may be colored and transparent. The thickness of the first alignment layer 23F may be equal to or different from that of the second alignment layer 23B. If the alignment layers are required to exert a uniform regulating force, the first and second alignment layers 23F and 23B are each preferred to have a thickness of 10 nm or more. If the alignment layers are required to have improved transparency, the first and second alignment layers 23F and 23B are each preferred to have a thickness of 500 nm or less.

The material constituting the first and second alignment layers 23F and 23B may be an organic polymer compound or inorganic oxide. Examples of the organic polymer compound include at least one selected from the group consisting of polyimide resins, polyamide resins, and polyvinyl alcohol resins. The inorganic oxide is at least one selected from the group consisting of silicon oxide, zirconium oxide, and silicone.

The first and second electrode layers 24F and 24B apply a voltage therebetween. The first and second electrode layers 24F and 24B may each have a single-layer structure or may have a multilayer structure. The first and second electrode layers 24F and 24B may each be colorless and transparent or may be colored and transparent. The thickness of the first electrode layer 24F may be equal to or different from that of the second electrode layer 24B. If the electrode layers are required to have reduced resistance, the first and second electrode layers 24F and 24B are each preferred to have a thickness of 5 nm or more. If the electrode layers are required to have improved transparency, the first and second electrode layers 24F and 24B are each preferred to have a thickness of 100 nm or less.

The material constituting each of the first and second electrode layers 24F and 24B may be a conductive inorganic oxide, metal, or conductive organic polymer compound. Examples of the conductive inorganic oxide include at least one selected from the group consisting of indium tin oxide, fluorine doped tin oxide, tin oxide, and zinc oxide. The metal may be a thin film of gold or silver with a thickness of several nanometers to several tens of nanometers, or a nanowire of gold or silver. Examples of the conductive organic polymer compound include at least one selected from the group consisting of carbon nanotubes and poly(3,4-ethylenedioxythiophene).

The first substrate 25F has a first inner surface 251F supporting the first electrode layer 24F and the first alignment layer 23F. The first substrate 25F has a first outer surface 25SF supporting the first hard coat layer 29F. The second substrate 25B has a second inner surface 251B supporting the second electrode layer 24B and the second alignment layer 23B. The second substrate 25B has a second outer surface 25SB supporting the second hard coat layer 29B. The first and second substrates 25F and 25B sandwich the light control layer 22 via the first electrode layer 24F, the first alignment layer 23F, the second electrode layer 24B, and the second alignment layer 23B.

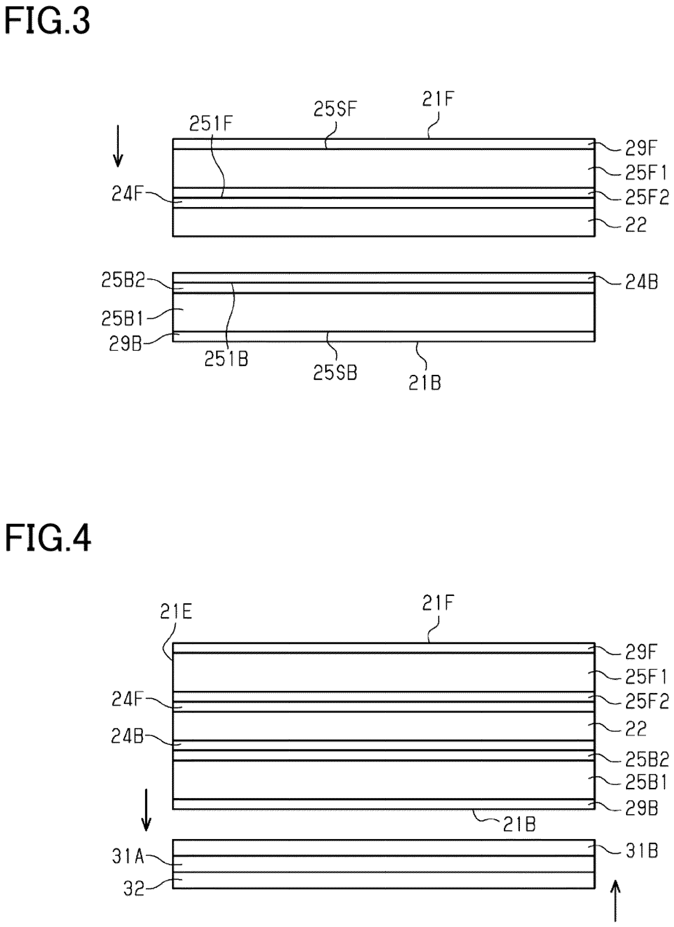

The first and second substrates 25F and 25B may each have a single-layer structure or may have a multilayer structure. The first substrate 25F, if it has a multilayer structure, may include a first support substrate 25F1 (see Fig. 3), and a first primer layer 25F2 (see Fig. 3) constituting the first inner surface 251F. The second substrate 25B, if it has a multilayer structure, may include a second support substrate 25B1 (see Fig. 3), and a second primer layer 25B2 (see Fig. 3) constituting the second inner surface 251B.

The first and second substrates 25F and 25B may each be colorless and transparent or may be colored and transparent. If the flexible substrates are required to have increased rigidity, the first and second substrates 25F and 25B are each preferred to have a thickness of 20 µm or more. If the flexible substrates are required to have improved transparency, the first and second substrates 25F and 25B are each preferred to have a thickness of 500 µm or less.

The material constituting the first and second substrates 25F and 25B may be an organic polymer compound or inorganic polymer compound. Examples of the organic polymer compound include at least one selected from the group consisting of polyester resins, polyacrylate resins, polycarbonate resins, polyolefin resins, polyvinyl resins, and polyamide resins. Examples of the polyester resins include at least one selected from the group consisting of polyethylene terephthalate, polyethylene naphthalate, polypropylene terephthalate, and polybutylene terephthalate. Examples of the polyacrylate resins include at least one selected from the group consisting of polymethyl methacrylate, polyethyl methacrylate, and polybutyl methacrylate. Examples of the polyolefin resins include at least one selected from the group consisting of polyethylenes, polypropylenes, and cycloolefin polymers. Examples of the polyvinyl resins include at least one selected from the group consisting of polyvinyl chlorides and polyvinylidene chlorides. Examples of the polyamide resins include at least one selected from the group consisting of nylon 6 and nylon 66. Examples of the inorganic polymer compound include at least one selected from the group consisting of silicon oxide, silicon oxynitride, and silicon nitride.

### [Hard coat layer]

The first hard coat layer 29F is located on one side of the first substrate 25F opposed to the first electrode layer 24F. The first hard coat layer 29F constitutes a front surface 21F of the light control sheet 21. The second hard coat layer 29B is located on one side of the second substrate 25B opposed to the second electrode layer 24B. The second hard coat layer 29B constitutes a rear surface 21B of the light control sheet 21. In the light control laminate 11, the first and second substrates 25F and 25B are sandwiched between the first and second hard coat layers 29F and 29B.

The first hard coat layer 29F (i) improves physical durability at the front surface 21F of the light control sheet 21. The internal stress in the first hard coat layer 29F acts as a force warping the light control sheet 21 such that the edge face 21E of the light control sheet 21 is pulled up from the transparent body 41, i.e., such that self-separation is induced in the light control sheet 21. The internal stress in the second hard coat layer 29B acts as a force warping the light control sheet 21 such that the edge face 21E of the light control sheet 21 is pushed against the transparent body 41, i.e., such that a force contrary to the first hard coat layer 29F is induced. Thus, the second hard coat layer 29B (iii) reduces the internal stress that could be a factor inducing self-separation in the light control sheet 21.

The first and second hard coat layers 29F and 29B each have a pencil hardness of B or more and 7H or less. The pencil hardness of the first hard coat layer 29F may be lower than, equal to, or higher than that of the second hard coat layer 29B. The pencil hardness is measured in accordance with JIS K 5600-5-4: 1999.

If the front surface 21F of the light control sheet 21 is required to have improved physical durability, the first hard coat layer 29F is preferred to have a surface hardness of H or more. If the light control sheet 21 is required to have suppressed curling when it is produced as a roll, the first and second hard coat layers 29F and 29B are each preferred to have a surface hardness of H or more. If the light control sheet 21 is required to have improved transparency, the first and second hard coat layers 29F and 29B are each preferred to have a surface hardness, as a pencil hardness, of 2H or less. If the light control sheet 21 is required to have enhanced resistance to self-separation, the difference in surface hardness between the first and second hard coat layers 29F and 29B is preferred to be two steps or less.

The first and second hard coat layers 29F and 29B each have a thickness of 0.1 µm or more and 10 µm or less. The thickness of the first hard coat layer 29F may be smaller than, equal to, or larger than that of the second hard coat layer 29B.

If the light control sheet 21 is required to have improved physical durability at the front surface 21F thereof, the first hard coat layer 29F is preferred to have a thickness of 0.5 µm or more. If the light control sheet 21 is required to have suppressed curling when it is produced as a roll, the first and second hard coat layers 29F and 29B are each preferred to have a thickness of 0.5 µm or more.

In the production process of the light control sheet 21, lamination of the first hard coat layer 29F is followed by lamination of the second hard coat layer 29B. Alternatively, lamination of the second hard coat layer 29B may be followed by lamination of the first hard coat layer 29F. In other words, in the production process of the light control sheet 21, the first and second hard coat layers 29F and 29B are laminated one by one. In this case, the larger the thickness of the first hard coat layer 29F or the second hard coat layer 29B, the more uneven distribution of the internal stress becomes apparent in the production process. From this perspective, if the light control sheet 21 is required to have easier handleability, the first and second hard coat layers 29F and 29B are each preferred to have a thickness of 20 µm or less, more preferably 10 µm or less, and even more preferably 5 µm or less. Constraint regarding the thicknesses of the first and second hard coat layers 29F and 29B can be mitigated by selecting the materials constituting these layers.

If the light control sheet 21 is required to have improved transparency, the first and second hard coat layers 29F and 29B are each preferred to have a thickness of 5 µm or less. If the light control sheet 21 is required to have enhanced resistance to self-separation, the difference in thickness between the first and second hard coat layers 29F and 29B is preferred to be 1 µm or less.

The first and second hard coat layers 29F and 29B may each have a single-layer structure or may have a multilayer structure. The first and second hard coat layers 29F and 29B, if they each have a multilayer structure, may each include a layer with a function of enhancing physical durability, and another layer with at least one of a gas barrier function, blocking suppression function, anti-glare function, infrared absorption function, ultraviolet absorption function, and color correction function.

The first and second hard coat layers 29F and 29B may each be colorless and transparent or may be colored and transparent.

The material constituting the first and second hard coat layers 29F and 29B may be an organic compound, inorganic compound, or organic-inorganic composite material. The first and second hard coat layers 29F and 29B, if they each have a multilayer structure, may include a layer composed of an organic compound and a layer composed of an inorganic compound.

An example of the organic compound may be a cured product of a UV curable resin or a cured thermosetting resin. If surface hardness is required to be improved, the organic compound constituting the first and second hard coat layers 29F and 29B is preferred to be a multifunctional curable resin. Examples of the curable resin include at least one selected from the group consisting of acrylic (meth)acrylate resins, polycarbonate (meth)acrylate resins, urethane (meth)acrylate resins, epoxy (meth)acrylate resins, polyester (meth)acrylate resins, polyether (meth)acrylate resins, polybutadiene (meth)acrylate resins, silicone (meth)acrylate resins, and polyol (meth)acrylate resins. The term (meth)acrylate includes methacrylates and acrylates. Examples of the inorganic compound include at least one selected from the group consisting of silicon oxide, silicon nitride, silicon oxynitride, titanium oxide, titanium nitride, titanium oxynitride, boron oxide, and aluminum oxide. Examples of the organic-inorganic composite material include at least one selected from the group consisting of siloxane compounds and organosilicon compounds.

The drive unit 61 is separately connected to the first and second electrode layers 24F and 24B. The drive unit 61 applies a drive voltage between the first and second electrode layers 24F and 24B. The drive voltage changes the alignment state of the liquid crystal compound. With the drive voltage applied by the drive unit 61, the state of the light control sheet 21 is changed from transparent to opaque.

During release of drive voltage application, the liquid crystal compound is subjected to an alignment regulating force of the first and second alignment layers 23F and 23B. The light control sheet 21 is brought into a transparent state in which light scattering is suppressed in the light control layer 22 over the entire visible light region. With the start of drive voltage application, the liquid crystal compound is subjected to a regulating force of the electric field resisting against the alignment regulating force. The light control sheet 21 is brought into an opaque state in which light scattering is caused in the light control layer 22 over the entire visible light region. With re-release of drive voltage application, the liquid crystal compound again follows the alignment regulating force of the first and second alignment layers 23F and 23B. The light control sheet 21 is again brought into the transparent state, with light scattering suppressed in the light control layer 22 over the entire visible light region.

If the light control sheet 21 has a configuration in which the state is switched between transparent and opaque based on alignment changes of the liquid crystal compound due to drive voltage application, the first and second alignment layers 23F and 23B may be omitted. In this case, the light control layer 22 is in contact with the first electrode layer 24F via the first surface 22SF thereof, and in contact with the second electrode layer 24B via the second surface 22SB thereof. If the first and second alignment layers 23F and 23B are omitted, the liquid crystal compound is not subjected to the alignment regulating force during release of drive voltage application. Thus, the light control sheet 21 is brought into the opaque state in which light scattering is caused in the light control layer 22 over the entire visible light region. With drive voltage application, the liquid crystal compound is subjected to the alignment regulating force of the electric field. Thus, the light control sheet 21 is brought into the transparent state in which light scattering is suppressed in the light control layer 22 over the entire visible light region. With re-release of drive voltage application, the liquid crystal compound is released from the alignment regulating force of the electric field. Thus, the light control sheet 21 returns to the opaque state in which light scattering is caused in the light control layer 22 over the entire visible light region. In other words, the drive type of the light control sheet 21 may be changed from a reverse type to a normal type.

### [Adhesive layer 31]

The adhesive layer 31 is located between the light control sheet 21 and the transparent body 41. The adhesive layer 31 adheres the rear surface 21B of the light control sheet 21 to the transparent body 41 by self-adhesion. Self-adhesiveness of the adhesive layer 31 which is the adhesiveness of the adhesive layer 31 itself (ii) enables separation of the light control sheet 21 from the transparent body 41 relying on external stress, and enables re-adhesion between the light control sheet 21 and the transparent body 41.

The adhesion derived from the self-adhesion of the adhesive layer 31 can adhere the light control sheet 21 and the transparent body 41 together using the own weight of the light control sheet 21 in the state in which the adhesive layer 31 is in contact with the light control sheet 21 and the transparent body 41, without requiring processing using heating or drying or without pressing the light control sheet 21 against the transparent body 41. The adhesive strength of the adhesive layer 31 derived from self-adhesion is 1N/25 mm or less. If the light control sheet 21 is required to have improved separability relying on external stress, the adhesive strength of the adhesive layer 31 is preferred to be, for example, 0.5 N/25 mm or less, and more preferred to be 0.1 N/25 mm or less. If the light control sheet 21 is required to have even more improved separability relying on external stress, the adhesive layer 31 is preferred to be a gel polymer sheet and is preferred to have an adhesive strength of 0.04 N/25 mm or less. The adhesive strength is the 180° adhesive strength in accordance with JIS Z 0237.

The adhesive layer 31 may have a single-layer structure or may have a multilayer structure.

The adhesive layer 31, if it has a single-layer structure, may be a self-adhesive layer 31A composed of a self-adhesive agent applied to the rear surface 21B of the light control sheet 21 or applied to the front surface of the transparent body 41.

The adhesive layer 31, if it has a multilayer structure, may include an adhesive substrate layer 31B, and a self-adhesive layer 31A composed of a self-adhesive agent applied to the adhesive substrate layer 31B. In this case, the adhesive substrate layer 31B may be non-removably adhered to the rear surface 21B of the light control sheet 21 or may be non-removably adhered to the front surface of the transparent body 41. If the adhesive substrate layer 31B is adhered to the rear surface 21B of the light control sheet 21, the light control laminate 11 may include a release layer 32 (see Fig. 4) for protecting the self-adhesive layer 31A, and the rear surface of the light control laminate 11 may be composed of the release layer 32. The adhesive layer 31 may be sandwiched and held between two release layers in advance, and the adhesive layer 31 with one of the two release layers released may be affixed to the rear surface 21B of the light control sheet 21 to provide a two-layer structure.

If the light control device is required to have improved transparency, the self-adhesive layer 31A is preferred to have a thickness, for example, of 50 µm or less. If the light control sheet 21 is required to have enhanced resistance to self-separation, the self-adhesive layer 31A is preferred to have a thickness, for example, of 10 µm or more.

Examples of the material constituting the self-adhesive layer 31A include at least one selected from the group consisting of polyolefin resins, polystyrene resins, polyamide resins, polyester resins, polyvinyl resins, polycarbonate resins, polyacrylate resins, polyurethane resins, and silicone resins. The material constituting the self-adhesive layer 31A is preferred to be a combination of these materials and is preferred to be an elastomer. Examples of the polyolefin resins include at least one selected from the group consisting of polyethylenes and polypropylenes. Examples of the polystyrene resins include at least one selected from the group consisting of polystyrenes and acrylic-butadiene-styrene copolymers. Examples of the polyamide resins include at least one selected from the group consisting of nylon 6 and nylon 66. Examples of the polyester resins include at least one selected from the group consisting of polyethylene terephthalate, polybutylene terephthalate, and polypropylene terephthalate. Examples of the polyvinyl resins include at least one selected from the group consisting of polyvinyl chlorides and polyvinylidene chlorides. Examples of the polycarbonate resins include at least one selected from the group consisting of polycarbonates and polyester carbonates. Examples of the polyacrylate resins include at least one selected from the group consisting of polymethyl methacrylate and polyethyl methacrylate. Examples of the polyacrylate resins include at least one selected from the group consisting of polymethyl methacrylate, polyethyl methacrylate, and polybutyl methacrylate. Examples of the polyurethane resins include at least one selected from the group consisting of aromatic polyisocyanates, aliphatic polyisocyanates, aromatic aliphatic polyisocyanates, and copolymers of alicyclic polyether polyols and polyurethane polyols. Examples of the silicone resins include at least one selected from the group consisting of alkenyl group-containing alkylsiloxanes and hydrosilyl group-containing siloxanes.

### [Sealing part 51]

The sealing part 51 contacts and covers the edge face 21E of the light control sheet 21 throughout the periphery thereof to seal the edge face 21E of the light control sheet 21. The sealing part 51 adheres the edge face 21E of the light control sheet 21 to the transparent body 41. Since self-separation of the light control sheet 21 tends to occur from the edge face 21E of the light control sheet 21, the sealing part 51 that adheres the edge face 21E of the light control sheet 21 to the transparent body 41 (iv) reduces the number of starting points of self-separation in the light control sheet 21.

The sealing part 51 may be in contact with the transparent body 41 or may be in contact with the transparent body 41 via the adhesive layer 31. The sealing part 51, if it is in contact with the transparent body 41, may be in contact with the edge face of the adhesive layer 31 together with the edge face 21E of the light control sheet 21. If the sealing part 51 is in contact with the transparent body 41 via the adhesive layer 31, the adhesive layer 31 may protrude outward from the edge of the light control sheet 21, and the sealing part 51 and the adhesive layer 31 may have an adhesive strength higher than the adhesive strength between the second hard coat layer 29B and the adhesive layer 31.

If the light control sheet 21 is required to be facilitated in separation and re-adhesion, the sealing part 51 is preferred to be in contact with the edge face of the adhesive layer 31 together with the edge face 21E of the light control sheet 21 such that the light control sheet 21 and the adhesive layer 31 are sealed. Thus, durability at the edge face of the adhesive layer 31 will be improved, resultantly facilitating separation and re-adhesion of the light control sheet 21.

The sealing part 51 for the light control sheet 21 and the transparent body 41 may be formed after the light control sheet 21 has been positioned on the transparent body 41, and may be adhered to the transparent body 41 along with the formation of the sealing part 51. The sealing part 51 for the light control laminate 11, or for the light control sheet 21 with omission of the adhesive layer 31, may be formed before being positioned on the transparent body 41, and may be adhered to the transparent body 41 along with the positioning of the light control sheet 21.

The sealing part 51 may have a single-layer structure or may have a multilayer structure.

If the sealing part 51 is required to have improved sealing properties or is required to have enhanced resistance to self-separation, the sealing part 51 may have a multilayer structure including a first sealing part and a bonding layer. The first sealing part constituting the sealing part 51 may be made of a material specialized for sealing, and may contact the edge face 21E of the light control sheet 21 for covering the entirety thereof. The bonding layer constituting the sealing part 51 may be made of a material specialized for bonding the first sealing part to the transparent body 41, and may contact the first sealing part to bond it to the transparent body 41. In this case, the first sealing part may be omitted from the sealing part 51, and the light control laminate 11 may include the first sealing part.

If the sealing part 51 is required to have enhanced resistance to self-separation, the sealing part 51 is preferred to be in contact with the edge of the front surface 21F of the light control sheet 21 and have a thickness larger than that of the light control sheet 21. Such a sealing part 51 can cause the edge face 21E of the light control sheet 21 to be drawn toward the transparent body 41, and can push the edge of the front surface 21F of the light control sheet 21 toward the transparent body 41. If the light control device is required to have improved transparency, the sealing part 51 contacting the edge of the front surface of the light control sheet 21 is preferred to have a width, for example, of 5 mm or less, and more preferably 2 mm or less.

The sealing part 51 may have self-adhesiveness higher than that of the self-adhesive layer 31A, or may not have self-adhesiveness but may have photosetting or thermosetting properties. Examples of the material constituting the sealing part 51 include at least one selected from the group consisting of polyacrylate resins, epoxy resins, allyl resins, polyurethane resins, and silicone resins. If sealing properties are required to be enhanced against bending of the light control sheet 21, the material constituting the sealing part 51 is preferred to be a polyacrylate resin with which high bending strength and high tensile strength can be achieved. Examples of the polyacrylate resin include at least one selected from the group consisting of acrylic (meth)acrylate resins, urethane (meth)acrylate resins, polyepoxy (meth)acrylate resins, polyester (meth)acrylate resins, polyether (meth)acrylate resins, polybutadiene (meth)acrylate resins, silicone (meth)acrylate resins, and polyol (meth)acrylate resins. The term (meth)acrylate includes methacrylates and acrylates.

### [Examples]

### [Example 1]

A normal type light control sheet 21 with the following configuration was obtained as the light control sheet 21 of Example 1.

First substrate 25F: PET film (thickness: 125 µm)
Second substrate 25B: PET film (thickness: 125 µm)
First hard coat layer 29F: Acrylic resin layer (thickness: 2 µm)
Second hard coat layer 29B: Acrylic resin layer (thickness: 2 µm)
First electrode layer 24F: Indium tin oxide layer (25 nm)
Second electrode layer 24B: Indium tin oxide layer (25 nm)

A PET film with a thickness of 125 µm (A4300 manufactured by Toyobo Co., Ltd.) was used as the first substrate 25F. A PET film with a thickness of 125 µm (A4300 manufactured by Toyobo Co., Ltd.) was used as the second substrate 25B.

A primer layer-forming coating material with a solid content of 50% was prepared using a UV curable hard coat agent (Lioduras (trademark) LCH6701 manufactured by Toyo Ink Manufacturing Co., Ltd.) and methyl ethyl ketone.

A hard coat-forming coating material with a solid content of 40% was prepared using an acrylic UV curable hard coat agent (Lucifral (trademark) NAB-016 manufactured by Nippon Paint Co., Ltd.) and methyl ethyl ketone.

A polymer network type liquid crystal coating material containing a liquid crystal compound and UV curable monomer (KN-F-001-01 manufactured by Kyushu Nanotec Optics) was prepared as a liquid crystal coating material forming the light control layer 22.

A laminate (Gelpoly (trademark) GPH125B23J12 manufactured by Panac Co., Ltd.) of a bonding substrate layer that is a PET film, a self-adhesive layer having self-adhesiveness laminated on one side of the bonding substrate layer, and a release layer for protecting the self-adhesive layer was used as the adhesive layer 31. Gelpoly had a glass adhesive strength of 0.01 N/25 mm or more and 0.50 N/25 mm or less. The glass adhesive strength of the adhesive layer 31 was measured using a method based on JIS Z-0237: 2009. In this case, the adhesive strength was measured after the lapse of 30 minutes from adhesion to glass. The presence of a range of the adhesive strength measurements is due to the low adhesive strength of the adhesive layer.

A sealing coating material obtained by adding 1 part by weight of a polymerization initiator to 100 parts by weight of a sealant (Photorec A116 manufactured by Sekisui Chemical Co., Ltd.) was used as a material for forming the sealing part 51.

First, as shown in Fig. 3, the primer layer-forming coating material was applied to one surface of a substrate 25F1 serving as a first substrate 25F so that a primer layer 25F2 would have a dry thickness of 1 µm, followed by heating, drying, and UV exposure to obtain a first substrate 25F, i.e., a substrate 25F1, having a primer layer 25F2. Next, the hard coat-forming coating material was applied to a first outer surface 25SF of the first substrate 25F so that a first hard coat layer 29F would have a dry thickness of 2 µm, followed by heating, drying, and UV exposure to obtain a first substrate 25F having a first hard coat layer 29F. The first hard coat layer 29F of Example 1 was confirmed to have a pencil hardness of H through measurement based on JIS K 560-5-4: 1999.

Next, an indium tin oxide layer was formed as a first electrode layer 24F on the primer layer 25F2 of the first substrate 25F having the first hard coat layer 29F so that the first electrode layer 24F would have a thickness of 25 nm. In this case, a film of the indium tin oxide layer was formed through a reactive sputtering method using an indium tin oxide target, followed by heating.

Next, the primer layer-forming coating material was applied to one surface of a substrate 25B1 serving as a second substrate 25B so that a primer layer 25B2 would have a dry thickness of 1 µm, followed by heating, drying, and UV exposure to obtain a second substrate 25B having a primer layer. Next, the hard coat-forming coating material was applied to a second outer surface 25SB of the second substrate 25B so that a hard coat layer 29B would have a dry thickness of 2 µm, followed by heating, drying, and UV exposure to obtain a second substrate 25B having a second hard coat layer 29B. The second hard coat layer 29B of Example 1 was confirmed to have a pencil hardness of H through measurement based on JIS K 560-5-4: 1999.

Next, an indium tin oxide layer was formed as a second electrode layer 24B on the second primer layer 25B2 of the second substrate 25B having the second hard coat layer 29B so that the second electrode layer 24B would have a thickness of 25 nm. In this case, a film of the indium tin oxide layer was formed through a reactive sputtering method using an indium tin oxide target, followed by heating.

Next, bead spacers were sprinkled on the first electrode layer 24F of the first substrate 25F having the first hard coat layer 29F. In this case, a dispersion obtained by dispersing bead spacers having an average particle size of 25 µm in an alcohol solvent was sprinkled on the first electrode layer 24F, followed by drying to thereby sprinkle the bead spacers.

Subsequently, the liquid crystal coating material was applied to the first electrode layer 24F on which the bead spacers were sprinkled, followed by UV exposure to obtain a first substrate 25F having a light control layer 22. Then, the second substrate 25B was affixed to the first substrate 25F having the light control layer 22 such that the second electrode layer 24B was in contact with the light control layer 22, followed by affixing the second substrate 25B to the first substrate 25F having the light control layer 22, while pressure was applied to the laminate, thereby obtaining a light control sheet 21 of Example 1.

Next, as shown in Fig. 4, an adhesive substrate layer 31B of an adhesive layer 31 was bonded to the rear surface 21B of the second hard coat layer 29B of the light control sheet 21 of Example 1 via a bonding layer (TD06 manufactured by Tomoegawa Paper Co., Ltd.). Thus, a light control laminate 11 of Example 1 was obtained. Then, the release layer 32 was separated from the self-adhesive layer 31A of the adhesive layer 31 of the light control laminate 11, and the self-adhesive layer 31A was bonded to A3 size blue plate glass with a flat plate shape.

In this case, the second hard coat layer 29B allows an internal stress conflicting with the internal stress in the first hard coat layer 29F to act on the light control sheet 21. The self-adhesive layer 31A (ii) enables separation of the light control sheet 21 relying on external stress, and re-adhesion thereof, during positioning of the light control sheet 21. When the edge of the transparent body 41 is adhered to the edge of the light control sheet 21, the high cohesion of the self-adhesive layer 31A promotes adhesion of the light control sheet 21 from one edge to the other edge thereof so as not to entrap bubbles between the self-adhesive layer 31A and the transparent body 41. Consequently, when proceeding with adhesion of the light control sheet 21, the light control sheet 21 can be entirely adhered to the transparent body 41 without using a high pressure or installation water for adhering the entirety of the light control sheet 21 to the transparent body 41. The internal stress in the second hard coat layer 29B (iii) reduces the internal stress in the light control sheet 21 that could be a factor inducing self-separation.

Then, the sealing coating material was applied to the edge of the transparent body 41 so as to be in contact with the front surface 21F of the light control sheet 21 positioned on the transparent body 41, the edge face 21E of the light control sheet 21, and the edge face of the adhesive layer 31. In this case, the sealing coating material was applied to the front surface 21F of the light control sheet 21 so that the width of the sealing coating material overlapped with the front surface 21F would be 1 mm. The width of the sealing coating material overlapped with the front surface 21F corresponds to the width of the sealing part 51 overlapped with the front surface 21F in the direction orthogonal to the direction in which the edge of the light control sheet 21 extends. Next, the sealing coating material was exposed to black light and three-wavelength fluorescent light to form a sealing part 51. Thus, the sealing part 51 adheres the light control sheet 21 to the transparent body 41 at the edge face 21E of the light control sheet 21 where self-separation tends to occur, and (iv) reduces the number of starting points of self-separation in the light control sheet 21.

### [Example 2]

A light control device of Example 2 was obtained as in Example 1 except that the thickness of the first hard coat layer 29F was changed to 1 µm and the surface hardness thereof was changed to a pencil hardness of HB.

### [Example 3]

A light control device of Example 3 was obtained as in Example 1 except that the thickness of the first hard coat layer 29F was changed to 5 µm and the surface hardness thereof was changed to a pencil hardness of 2H.

### [Example 4]

A light control device of Example 4 was obtained as in Example 1 except that the thickness of the second hard coat layer 29B was changed to 1 µm and the surface hardness thereof was changed to a pencil hardness of HB.

### [Example 5]

A light control device of Example 5 was obtained as in Example 1 except that the thickness of the second hard coat layer 29B was changed to 5 µm and the surface hardness thereof was changed to a pencil hardness of 2H.

### [Example 6]

A light control device of Example 6 was obtained as in Example 1 except that the width of the sealing coating material overlapped with the front surface 21F of the light control sheet 21 was changed from 1mm to 0.5 mm.

### [Example 7]

A light control device of Example 7 was obtained as in Example 1 except that the width of the sealing coating material overlapped with the front surface 21F of the light control sheet 21 was changed from 1 mm to 2 mm.

### [Example 8]

The light control device of Example 8 was obtained as in Example 1 except that application of the hard coat-forming coating material was changed to affixing of a window film (nano80S manufactured by 3M Limited) to form the first hard coat layer 29F.

### [Comparative Example 1]

A light control device of Comparative Example 1 was obtained as in Example 1 except that the adhesive layer 31 was changed to a non-carrier type acrylic adhesive layer having an adhesive strength of 28 N/25 mm (TD06 manufactured by Tomoegawa Paper Co., Ltd.). In this case, fine positioning of the light control sheet 21 on the transparent body 41 was difficult due to the high adhesive strength of the adhesive layer 31, and bubbles entrapped between the adhesive layer 31 and the transparent body 41 were discharged by strongly pressing the front surface 21F.

### [Comparative Example 2]

A light control device of Comparative Example 2 was obtained as in Example 1 except that formation of the primer layer 25F2, first hard coat layer 29F, and second hard coat layer 29B was omitted from the production method. In other words, a light control device of Comparative Example 2 was obtained with omission of the primer layer 25F2, first hard coat layer 29F, and second hard coat layer 29B from the light control device of Example 1.

### [Comparative Example 3]

A light control device of Comparative Example 3 was obtained as in Example 1 except that formation of the second hard coat layer 29B was omitted from the production method. In other words, a light control device of Comparative Example 3 was obtained with omission of the second hard coat layer 29B from the light control device of Example 1.

### [Comparative Example 4]

A light control device of Comparative Example 4 was obtained as in Example 1 except that formation of the sealing part 51 was omitted from the production method. In other words, a light control device of Comparative Example 4 was obtained with omission of the sealing part 51 from the light control device of Example 1.

### [Comparative Example 5]

An acrylic resin was used as an adhesive coating material for forming an adhesive layer 31 of Comparative Example 5. The acrylic resin of Comparative Example 5 was prepared by adding 0.5 parts by weight of a curing agent (K130 manufactured by Saiden Chemical Industry Co.,Ltd.), 0.5 parts by weight of a silane coupling agent (S-1 manufactured by Saiden Chemical Industry Co.,Ltd.), and 100 parts by weight of a UV absorber (TINUVIN109 manufactured by BASF Japan Ltd.) to 100 parts by weight of an acrylic adhesive coating material (0C3949 manufactured by Saiden Chemical Industry Co.,Ltd.), and adjusting the mixture with ethyl acetate so that the solid content would be 30 %.

Then, the adhesive coating material of Comparative Example 5 was applied to a light release film with a thickness of 38 µm (COSMOPEEL (trademark) E7002 manufactured by Toyobo Co., Ltd.), followed by drying the coating film for 2 minutes in an atmosphere of 100 °C. Then, a heavy release film (COSMOPEEL (trademark) E7001 manufactured by Toyobo Co., Ltd.) was affixed to the dried coating film, and the laminate was cured for 48 hours in an atmosphere of 40°C to obtain an adhesive layer 31 of Comparative Example 5 sandwiched between two release films.

A light control device of Comparative Example 5 was obtained as in Example 1 except that the adhesive layer 31 of Example 1 was changed to an adhesive layer 31 of Comparative Example 5, i.e., the non-carrier type acrylic adhesive layer with an adhesive strength of 1.1 N/25 N or more and 1.25 N/25 mm. In this case, fine positioning of the light control sheet 21 on the transparent body 41 was difficult due to the high adhesive strength of the adhesive layer 31, and bubbles entrapped between the adhesive layer 31 and the transparent body 41 were discharged by strongly pressing the front surface 21F.

### [Comparative Example 6]

An acrylic resin was used as an adhesive coating material for forming an adhesive layer 31 of Comparative Example 6. The acrylic resin of Comparative Example 6 was prepared by adding 0.5 parts by weight of a curing agent (K130 manufactured by Saiden Chemical Industry Co.,Ltd.) and 0.5 parts by weight of a silane coupling agent (S-1 manufactured by Saiden Chemical Industry Co.,Ltd.) to 100 parts by weight of an acrylic adhesive coating material (0C3949 manufactured by Saiden Chemical Industry Co.,Ltd.), and adjusting the mixture with ethyl acetate so that the solid content would be 30 %. In other words, an adhesive coating material with omission of the UV absorber from the acrylic resin of Comparative Example 5 was used as an adhesive coating material of Comparative Example 6.

Then, the adhesive coating material was applied to a light release film with a thickness of 38 µm (COSMOPEEL (trademark) E7002 manufactured by Toyobo Co., Ltd.), followed by drying the coating film for 2 minutes in an atmosphere of 100 °C. Then, a heavy release film (COSMOPEEL (trademark) E7001 manufactured by Toyobo Co., Ltd.) was affixed to the dried coating film, and the laminate was cured for 48 hours in an atmosphere of 40°C to obtain an adhesive layer 31 of Comparative Example 5 sandwiched between two release films.

A light control device of Comparative Example 6 was obtained as in Example 1 except that the adhesive layer 31 of Example 1 was changed to an adhesive layer 31 of Comparative Example 6, i.e., the non-carrier type acrylic adhesive layer with an adhesive strength of 3.0 N/25 N or more and 4.5 N/25 mm. In this case, fine positioning of the light control sheet 21 on the transparent body 41 was difficult due to the high adhesive strength of the adhesive layer 31, and bubbles entrapped between the adhesive layer 31 and the transparent body 41 were discharged by strongly pressing the front surface 21F.

### (A) Evaluation of physical durability

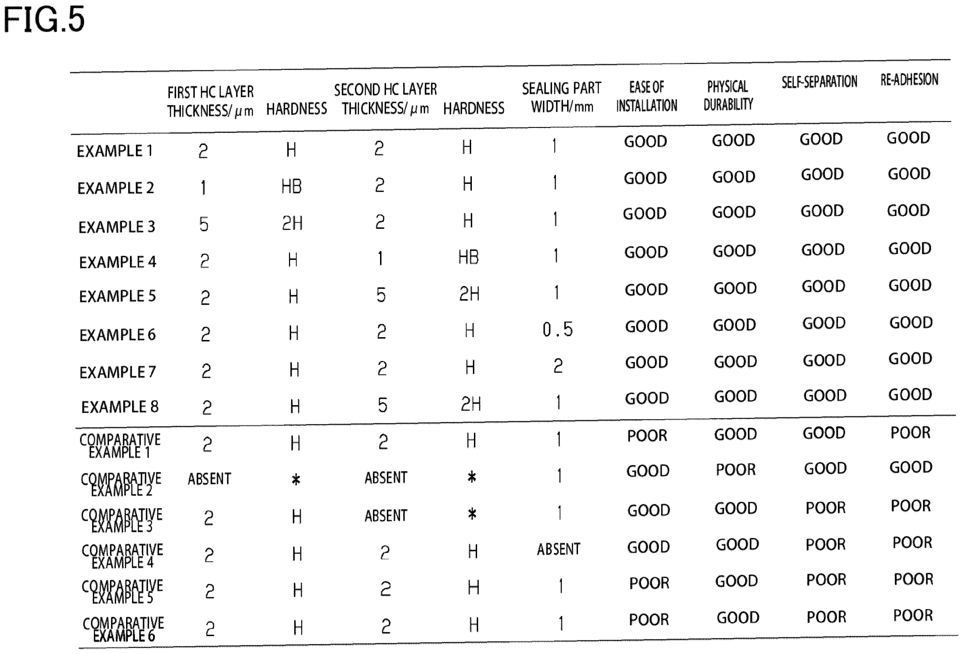

The front surface 21F of the light control sheet 21 of each light control device was evaluated on physical durability. Physical durability was evaluated by visually observing scratches on the front surface 21F after reciprocating thereon a #0000 steel wool back and forth 50 times, while applying a load of 100 g to the steel wool. As shown in Fig. 5, if the number of scratches was 10 or less on the front surface 21F, the light control device was evaluated to be Good, and if the number of scratches was far more than 10 on the front surface 21F, the light control device was evaluated to be Poor.

### (B) Evaluation of self-separation

After being left for 120 hours in an atmosphere of 80°C, each light control device was visually observed as to whether the light control sheet 21 had been separated from the transparent body 41, i.e., whether self-separation had occurred in the light control sheet 21. As shown in Fig. 5, if no self-separation was observed, the light control device was evaluated to be Good, and if self-separation was observed, the light control device was evaluated to be Poor.

### (C) Evaluation of re-adhesion

Each light control device after being evaluated on self-separation was examined as to whether the light control laminate 11 could be separated from the transparent body 41 by inserting a blade between the sealing part 51 and the transparent body 41. Next, the light control laminate 11 separated from the transparent body 41 was examined as to whether it could be re-adhered to the transparent body 41. As shown in Fig. 5, if separation and re-adhesion of the light control laminate 11 were both possible, the light control device was evaluated to be Good, and if separation or re-adhesion of the light control laminate 11 was impossible, the light control device was evaluated to be Poor. It should be noted that a Good evaluation was given if the sealing part 51 alone was broken by the blade, and if the light control laminate 11 could be re-adhered to the transparent body 41 by re-forming only the sealing part 51.

As shown in Fig. 5, the light control devices of Examples 1 to 8 were all evaluated to be Good on (A) physical durability, (B) self-separation, and (C) re-adhesion.

The light control device of Comparative Example 1 including the adhesive layer 31 with an increased adhesive strength of 28 N/25 mm was evaluated to be Good on (A) physical durability and (B) self-separation; however, separation of the light control-sheet 21 relying on external stress, and re-adhesion thereof were confirmed to be difficult. As mentioned above, the light control device of Comparative Example 1 had low positioning accuracy and caused entrapment of bubbles when adhering the light control laminate 11 to the transparent body 41, and thus was confirmed to have poor ease of installation.

The light control device of Comparative Example 2 from which the two hard coat layers 29F and 29B were omitted was evaluated to be Good on (B) self-separation and (C) re-adhesion; however, numerous scratches were confirmed to be left on the front surface 21F of the light control sheet 21. The light control device of Comparative Example 3 from which the second hard coat layer 29B was omitted was evaluated to be Good on (A) physical durability; however, self-separation was confirmed to have occurred in the light control sheet 21, and self-separation was also confirmed to occur even after re-adhesion. The light control device of Comparative Example 4 from which the sealing part 51 was omitted was evaluated to be Good on (A) physical durability; however, self-separation was confirmed to have occurred in the light control sheet 21, and self-separation was also confirmed to occur even after re-adhesion.

According to the above embodiment, the effects listed below can be achieved.
(1) Since the light control laminate 11 includes the first hard coat layer 29F, (i) the front surface 21F of the light control sheet 21 is enhanced in physical durability.
(2) Since the light control sheet 21 is adhered to the transparent body 41 by self-adhesion of the adhesive layer 31, (ii) the light control sheet 21 can be separated and re-adhered during positioning thereof.
(3) Since the light control laminate 11 includes two hard coat layers 29F and 29B, the light control laminate 11 can (iii) reduce the internal stress that could be a factor inducing self-separation.
(4) Since the sealing part 51 adheres the edge face 21E of the light control sheet 21 to the transparent body 41, the light control device can (iv) reduce the number of starting points of self-separation in the light control sheet 21.
(5) If the self-adhesive layer 31A is formed on the rear surface 21B of the light control sheet 21, the configuration of the light control laminate 11 can be simplified due to omission of the adhesive substrate layer 31B. If the self-adhesive layer 31A is covered by a release layer in the light control laminate 11, the components required for affixing the light control laminate 11 are limited to two components of the transparent body 41 and the light control laminate 11. Consequently, the installation efficiency is increased when affixing the light control sheet 21.
(6) If the self-adhesive layer 31A is laminated on the adhesive substrate layer 31B, the adhesive laminate including the self-adhesive layer 31A and adhesive substrate layer 31B can be treated as a separate body from the light control sheet 21. Thus, the method of adhering the adhesive laminate to the rear surface 21B of the light control sheet 21 can be integrated into production of the light control laminate 11. Thus, a method of separately producing the adhesive laminate and the light control sheet 21 can be integrated into the method of producing the light control sheet 21 as a method which is not constrained by the self-adhesive layer 31A. Furthermore, the method of separately producing the adhesive laminate and the light control sheet 21 can be integrated into the method of producing the self-adhesive layer 31A as a method which is not constrained by the light control sheet 21.
(7) The light control sheet 21 containing a liquid crystal composition can cause internal separation of the light control layer 22 when separating the light control sheet 21 relying on external stress, in addition to causing separation at the interface between the light control sheet 21 and the adhesive layer 31. Even if the light control layer 22 has a configuration including an organic polymer layer, the organic polymer layer including numerous voids can cause internal separation of the light control layer 22 to some extent. In this regard, the adhesive layer 31 with a low adhesive strength such as of 1 N/25 mm or less can reduce the external stress required for separating the light control sheet 21 during positioning of the light control sheet 21 on the transparent body 41. Consequently, in the light control sheet 21 that could cause internal separation in the light control layer 22, (ii) achieving separation and re-adhesion according to the above item (2) exerts a more beneficial effect.

The above embodiment may be modified and implemented as described below.

### [Adhesive layer 31]

As viewed perpendicularly to the front surface 21F of the light control sheet 21, the entirety of the edge face of the adhesive layer 31 may match the edge face 21E of the light control sheet 21, or may be located inside the edge face 21E, or may be located outside the edge face 21E, . As viewed perpendicularly to the front surface 21F of the light control sheet 21, the edge face of the adhesive layer 31 may have a portion located outside the edge face 21E of the light control sheet 21, or may have a portion located inside the edge face 21E of the light control sheet 21, .

### [Sealing part 51]

The adhesive layer 31 may adhere a plurality of light control laminates 11 to the transparent body 41. In this case, part of the sealing part 51 located between adjacent light control sheets 21 may adhere the edge faces of the light control sheets 21 to the transparent body 41 via the adhesive layers 31. On the other hand, part of the sealing part 51 located at the edge in the group of the plurality of light control laminates 11 may adhere the edge faces of the adhesive layer 31 to the transparent body 41 together with the edge face 31E of the light control sheet 21, or may adhere the edge face 21E of the light control sheet 21 via the adhesive layer 31.

### [Reference Signs List]

- 11: Light control laminate
- 21: Light control sheet
- 21E, 31E: Edge face
- 21F: Front surface
- 21B: Rear surface
- 22: Light control layer
- 24F: First electrode layer
- 24B: Second electrode layer
- 29F: First hard coat layer
- 29B: Second hard coat layer
- 31: Adhesive layer
- 31A: Self-adhesive layer
- 32: Release layer
- 41: Transparent body
- 51: Sealing part

## Claims

1. A light control laminate comprising
a light control sheet; and
an adhesive layer that adheres a rear surface of the light control sheet to a transparent body by self-adhesion,
the light control laminate being provided with a sealing part that adheres an edge face of the light control sheet to the transparent body, the sealing part being used for sealing the edge face of the light control sheet, wherein
the light control sheet comprises
a first hard coat layer that constitutes a front surface of the light control sheet, and
a second hard coat layer that constitutes the rear surface of the light control sheet.

2. The light control laminate according to claim 1, wherein the first hard coat layer has a thickness smaller than that of the second hard coat layer.

3. The light control laminate according to claim 1 or 2, wherein the adhesive layer comprises
a self-adhesive layer that is applied to the rear surface of the light control sheet; and
a release layer that constitutes a rear surface of the light control laminate and covers the self-adhesive layer.

4. The light control laminate according to claim 1 or 2, wherein the adhesive layer comprises
a release layer that constitutes the rear surface of the light control laminate;
a substrate layer that is non-removably bonded to the rear surface of the light control sheet; and
a self-adhesive layer located between the release layer and the substrate layer.

5. The light control laminate according to any one of claims 1 to 4, wherein the light control sheet comprises
a first substrate having flexibility;
a second substrate having flexibility; and
a light control layer sandwiched between the first substrate and the second substrate, the light control layer containing an organic polymer layer defining multiple voids therein and a liquid crystal composition filling the voids.

6. A light control device comprising
a transparent body; and
the light control laminate according to any one of claims 1 to 5.

7. A light control device comprising
a transparent body;
a light control sheet that is adhered to the transparent body; and
a sealing part that adheres an edge face of the light control sheet to the transparent body and seals the edge face of the light control sheet, wherein
the transparent body comprises
an adhesive layer that adheres a rear surface of the light control sheet to the transparent body by self-adhesion; and
the light control sheet comprises
a first hard coat layer that constitutes a front surface of the light control sheet, and
a second hard coat layer that constitutes the rear surface of the light control sheet.

8. The light control device according to claim 6 or 7, wherein
the sealing part adheres an edge of the front surface of the light control sheet to the transparent body.

9. The light control device according to any one of claims 6 to 8, wherein the sealing part is a cured product of a UV curable resin.

10. The light control device according to any one of claims 6 to 9, wherein the transparent body has a flat plate shape.
